# EUROPÄISCHE PATENTSCHRIFT

(11) **EP 1 577 041 B1**
(45) Veröffentlichungstag und Bekanntmachung des Hinweises auf die Patenterteilung: **13.05.2009**
(21) Anmeldenummer: 05003817.3
(22) Anmeldetag: 23.02.2005
(51) Int. Cl.: B23F 19/10

(54) **Kegelrad-Verzahnmaschine zum Anfasen und/oder Entgraten von Kanten an den Zähnen eines Kegelrades und entsprechendes Verfahren**
Bevel gear cutting machine and method for chamfering and/or deburring tooth edges of a bevel gear
Machine et procédé correspondant de taillage de roues dentées coniques pour la chanfreinage et l'ébavaurage des extrémités de dents des roues dentées coniques

(30) Priorität: 19.03.2004 DE 202004004480 U
(43) Veröffentlichungstag der Anmeldung: 21.09.2005
(73) Patentinhaber: Klingelnberg GmbH, 42499 Hückeswagen (DE)
(72) Erfinder: Müller, Hartmuth, Dr., 42857 Remscheid (DE); Ribbeck, Karl-Martin, 42897 Remscheid (DE)
(74) Vertreter: OK pat AG

(56) Entgegenhaltungen:
- DE-A1- 4 319 326
- DE-A1- 19 646 189
- DE-A1- 19 900 423
- DE-U1- 20 103 328
- PATENT ABSTRACTS OF JAPAN Bd. 1995, Nr. 04, 31. Mai 1995 (1995-05-31) -& JP 07 024635 A (YUTAKA SEIMITSU KOGYO KK), 27. Januar 1995 (1995-01-27)

## Beschreibung

Die vorliegende Erfindung betrifft Verzahnmaschinen und das Entgraten und/oder Anfasen der Zahnkanten von Kegelrädern.

### Stand der Technik

Beim Fertigen von bogenverzahnten Kegelrädern werden die Zahnlücken überwiegend mit einem Messerkopf vom kleinen zum grossen Durchmesser des Radkörpers herausgearbeitet. Am äusseren Zahnende entsteht dabei durch die spanabhebende Bearbeitung ein Grat, und zwar hauptsächlich an der konkaven Flanke, denn diese Flanke bildet mit der Rückenfläche des Kegelradzahnes in der Regel einen spitzen Winkel. Würde man an dieser Stelle nur den Grat entfernen, bliebe eine sehr scharfe Profilkante stehen. Wegen der grossen Verletzungsgefahr, aber auch wegen schädlicher Verformungen beim Härten der Kegelräder werden diese Kanten häufig durch eine Fase gebrochen.

Ist dieser Winkel nicht so spitz, weil das Kegelrad z. B. einen kleinen Spiralwinkel hat, reicht es aus die Kante zu entgraten.

Für dieses Anfasen und/oder Entgraten von Kegelrädern sind Vorrichtungen bekannt, die für konventionelle mechanische Kegelrad-Verzahnmaschinen entwickelt wurden. Schon während des Fräsens der Kegelräder im diskontinuierlichen Teilverfahren werden nach jeder Zahnlücke die Zahnenden entgratet. Oder beim kontinuierlichen Verfahren wird nach dem Verzahnen in einem separaten Arbeitsgang das Anfasen und/oder Entgraten vorgenommen. Solch eine Verzahnmaschine ist aus der Japanischen Patentanmeldung JP 07 024635 bekannt.

Es kommen vielfach auch separat stehende Entgratvorrichtungen zum Einsatz. Bei diesen Vorrichtungen wird der Nachteil der zusätzlichen Werkstückspannung in Kauf genommen, um in der Nähe des Werkstücks mehr Platz zur Verfügung zu haben als in einer Verzahnmaschine, weil sich dann die Entgratwerkzeuge vielseitiger und einfacher auf die jeweiligen Werkstückabmessungen einstellen lassen. Ausserdem können auf einer Verzahnmaschine in gleicher Zeit mehr Kegelräder verzahnt werden, wenn sie dort nicht auch noch entgratet werden müssen.

Eine Entgratvorrichtung dieser Art ist in der DE 197 44 486 A1 beschrieben, bei der zwei unterschiedliche Fräser, die jeweils einen eigenen Drehantrieb haben, zum Entgraten eingesetzt werden. Sie sind auf einem gemeinsamen Support angeordnet und arbeiten bei stillstehendem Kegelrad mit einer einzigen radialen Vorschubbewegung. Nachteilig ist hierbei, dass die Fräser zueinander ausgerichtet werden müssen und jeder Fräser eine besondere Profilform seiner Schneiden benötigt, die dem jeweiligen zu entgratenden Kegelrad angepasst sein muss.

Eine andere separate Anfaseinrichtung für Kegelräder geht aus der DE 298 01 318 U1 hervor, die mit einem rotatorisch angetriebenen Fingerfräser arbeitet. Hierbei ist die Frässpindel 3-achsig, nämlich horizontal, vertikal und schwenkbar, gegenüber dem um seine Achse steuerbaren Werkstückträger bewegbar, und es ist eine Steuerung zur Kopplung der vier Achsbewegungen vorgesehen, wodurch der Fingerfräser entlang einer programmierten Bahn geführt wird. Neben den Nachteilen, die mit einer separaten Entgratvorrichtung verbunden sind, kommt bei dieser Einrichtung hinzu, dass sich trotz des grossen maschinentechnischen Aufwandes die äusseren Zahnenden von schlanken Schaftritzeln nicht anfasen lassen.

Bei einer bekannten Entgratvorrichtung, die direkt auf einer Verzahnmaschine eingesetzt wird, kommt ein mehrgängiger Schlagzahnfräser zum Einsatz, dessen Drehachse so eingestellt wird, dass sich die Schneide des Schlagzahnes entlang der anzufasenden Profilkante eines Kegelradzahnes bewegt. Dabei wird nicht im Teilverfahren, sondern bei konstanter Werkstückdrehung gearbeitet, so dass nacheinander jeder folgende Schlagzahn in die nächste Kegelradlücke eingreift. Der entscheidende Nachteil ist jedoch, dass nicht alle Kegelräder auf ihrer Verzahnmaschine mit einem Schlagzahnfräser entgratet werden können. Es wird als ein weiterer Nachteil angesehen, dass spezielle Schlagzahnfräser eingesetzt werden müssen. Ausserdem muss in der Maschine Platz für einen Schlagzahnfräser vorgesehen sein.

In der deutschen Auslegeschrift 11 85 039 A ist eine Verzahnmaschine beschrieben, in der ein als Hobelstahl bezeichnetes Werkzeug zum Einsatz kommt, das an einem druckmittelbetriebenen Kolben befestigt ist. Ein wesentlicher Nachteil dieser bekannten Vorrichtung besteht darin, dass der Hobelstahl jedes Zahnende nur mit einem in seiner Richtung zwar einstellbaren, aber dann in sich geraden Schnitt bearbeiten kann. Die zu entgratende Profilkante ist aber eine räumlich stark gekrümmte Kurve, die sich aus dem Schnitt zweier Flächen ergibt, nämlich der ohnehin schon gekrümmten Kegelradflanke mit anschliessender Fussausrundung sowie der Rückenfläche des Kegelradzahnes. Letztere ist in der Regel eine Kegelfläche, die zusätzlich noch einmal abgesetzt und/oder am Zahnkopf abgerundet sein kann. Das heisst, mit der bekannten Vorrichtung lässt sich die Profilkante nicht richtig anfasen. Es kann höchstens eine ausmittelnde Richtung eingestellt werden, und dann muss die Vorrichtung in mehreren Schnitten eine erhebliche Werkstoffmenge abhobeln, um die volle Zahnhöhe zu entgraten. Dabei kann sich leicht Sekundärgrat bilden, der genauso unerwünscht ist. Ausserdem lässt es sich kaum vermeiden, dass durch den Stossmeissel eine scharfe Kerbe in der Fussausrundung entsteht, die die Tragfähigkeit des Kegelritzels beeinträchtigt. Ein weiterer Nachteil ist der Aufwand, mit dem die eine geradlinige Stossvorrichtung manuell auf die jeweiligen Werkstückabmessungen eingestellt werden muss.

Ähnliche Nachteile treffen auch für die 1-achsig arbeitende Entgratvorrichtung nach der japanischen Druckschrift JP 10-180542 A zu, die ebenfalls in der Verzahnmaschine zum Einsatz kommt. In diesem Fall besteht das Stosswerkzeug aus einem Winkelhebel, der in seinem Scheitelpunkt drehbar gelagert ist. Sein kurzer Schenkel ist zu einer geraden Schneide ausgebildet, während an dem längeren Schenkel wieder ein druckmittelbetriebener Kolben angreift. Die Halterung für den Winkelhebel und den Kolben muss genau wie bei der Vorrichtung nach der DE 11 85 039 A so ausgerichtet werden, dass die kreisbogenförmig geführte Schneide sich in einer ausmittelnden Richtung an der Profilkante des stillstehenden Kegelrades entlangbewegt. Auch diese Vorrichtung ist nicht für das Entgraten von Kegelrädern und insbesondere Kegelritzeln einsetzbar. Ausserdem ist nachteilig, dass ein spezielles Stosswerkzeug erforderlich ist.

Von daher liegt der Erfindung die Aufgabe zugrunde, eine Kegelrad-Verzahnmaschine so auszugestalten, dass man mit geringem apparativem Aufwand sehr verschiedenartige Kegelräder, anfasen und/oder entgraten kann, sowie ein entsprechendes Verfahren bereit zu stellen.

Eine weitere Aufgabe der Erfindung liegt darin, eine Kegelrad-Verzahnmaschine so auszugestalten, dass die durch das Entgraten bedingte längere Verweildauer des Werkstücks in der Verzahnmaschine relativ kurz ist.

Erfindungsgemäss ist diese Aufgabe dadurch gelöst, dass eine Kegelrad-Verzahnmaschine vorgesehen wird, die unter anderem zum Anfasen und/oder Entgraten von Kanten an den Zähnen eines Kegelrades ausgelegt ist. Die Verzahnmaschine weist eine Werkstückspindel auf, welche das Kegelrad koaxial aufnimmt. Es ist ein Schlitten vorgesehen, der einen tellerförmigen Messerkopf mit mehreren Stabmessern aufnimmt. Die Verzahnmaschine hat insgesamt mindestens fünf numerisch steuerbare Achsen, die über eine programmierbare Steuerung ansteuerbar sind, wobei eine der Achsen eine Werkstückspindelachse der Werkstückspindel bildet. Eine andere Achse dient als Werkzeugspindelachse des tellerförmigen Messerkopfes. Die numerisch steuerbaren Achsen sind so ausgebildet und angeordnet, dass durch das Verstellen mindestens einer der Achsen die Werkstückspindel samt dem Kegelrad relativ zu dem Messerkopf so neigbar sind, dass die Stabmesser bei gleichzeitigem Rotieren der Werkstückspindel um die Werkstückspindelachse und des Messerkopfes um die Werkzeugspindelachse nacheinander in Zahnzwischenräume benachbarter Zähne eintauchen und eine Anfas- oder Entgratungsbewegung in Bezug auf die Kante ausführen. Die Werkstückspindelachse und/oder Werkzeugspindelachse sind so verstellbar, dass die relative Neigung zwischen der Werkstückspindel samt dem Kegelrad und den Messerkopf vergrösserbar ist. Derselbe Messerkopf ist für die Verzahnungsbearbeitung des Kegelrades und für das Anfasen und/oder Entgraten.

Die Aufgaben werden erfindungsgemäss durch eine Verzahnmaschine gemäss Patentanspruch 1 und ein Verfahren gemäss Patentanspruch 7 gelöst. Vorteilhafte Ausgestaltungen der erfindungsgemässen Verzahnmaschine bilden die Gegenstände der Patentansprüche 2 bis 6 und vorteilhafte Ausgestaltungen des erfindungsgemässen Verfahrens bilden die Gegenstände der Patentansprüche 8 bis 11.

Die wesentlichen Vorteile der Erfindung bestehen darin, dass mit den mittels einer programmierbaren Steuerung numerisch steuerbaren sechs Achsen (NC-Achsen) nahezu beliebig geformte Profilkanten von Kegelrädern mit den Schneide der Stabmesser erreichbar ist. Somit kann trotz gekrümmter Profilkante eine Fase erzeugt und/oder eine Entratung vorgenommen werden. Es lässt sich Sekundärgrat vermeiden da bei entsprechender steiler Neigung der Stabmesser in Bezug auf das Kegelrad keine grossen Werkstoffmengen abgehobelt werden müssen, um die volle Zahnhöhe zu entgraten.

Es ist auch vorteilhaft, dass gemäss Erfindung das Anfasen oder Entgraten in einem kontinuierlichen Prozess erfolgt, was zu wesentlich kürzeren Bearbeitungszeiten führt als bei diskontinuierlichen Prozessen.

Bisher wurde der Einsatz von eigenen NC-Achsen für die Schnittbewegung eines Entgraters als nicht wirtschaftlich im Vergleich zu rein mechanischen oder druckmittelbetriebenen Entgratungslösungen angesehen. Es ist ein besonderer Vorteil der erfindungsgemässen Vorrichtung, dass keine zusätzlichen NC-Achsen bereitgestellt werden müssen, sondern dass zum Entgraten die bereits vorhandenen numerisch steuerbare Achsen eingesetzt werden. Es ist ein weiterer Vorteil der Erfindung, dass keine speziellen Entgratungswerkzeuge eingesetzt werden müssen, die speziell gelagert und behandelt werden müssen. Ausserdem entfällt gemäss Erfindung das zeitaufwendige und zu Bedienfehlern führende Umrüsten. Dadurch entstehen für das Entgraten auf der Verzahnmaschine keine nennenswerten Zeitverluste. Ausserdem braucht es, je nach Ausführungsform, für die beim Entgraten oder Anfasen anfallenden Späne keine spezielle Auffang- oder Absaugvorrichtung.

Gemäss Erfindung können in vorteilhafter Weise Verzahnmaschinen modifiziert werden, wie sie in zahlreichen Industrie- und Fertigungsbetrieben zum Einsatz kommen.

### ZEICHNUNGEN

Ausführungsbeispiele der Erfindung werden im Folgenden unter Bezugnahme auf die Zeichnungen näher beschrieben. Es zeigen:
- **FIG. 1**: eine perspektivische Ansicht einer Verzahnmaschine gemäss der vorliegenden Erfindung;
- **FIG. 2**: eine schematische Draufsicht und Seitenansicht des Bearbeitungsbereichs der Verzahnmaschine beim Verzahnungsfräsen;
- **FIG. 3**: eine schematische Draufsicht und Seitenansicht des Bearbeitungsbereichs der Verzahnmaschine beim Entgraten oder Anfasen.

### Detaillierte Beschreibung

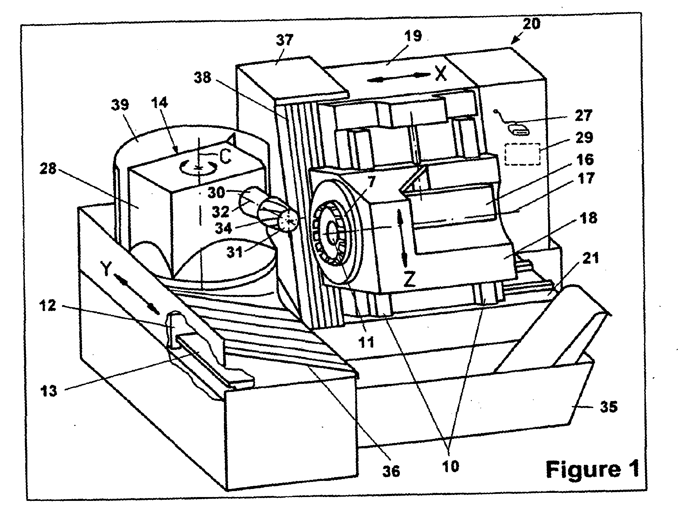

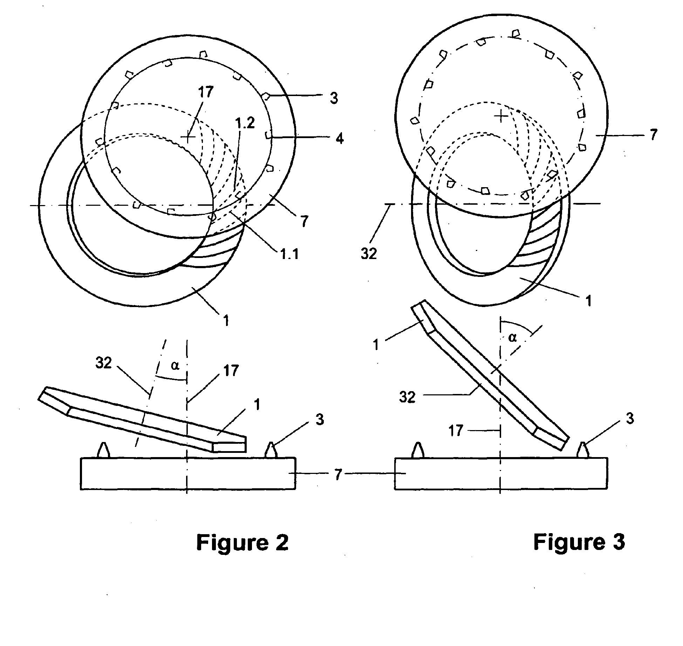

Eine mögliche Ausführungsform der Erfindung wird im Zusammenhang mit den Figuren 1, 2 und 3 beschrieben. In Fig. 1 wird ein Kegelradritzel bearbeitet, wohingegen in den Figuren 2 und 3 ein Tellerrad bearbeitet wird.

Fig. 1 zeigt in perspektivischer Darstellung den Grundaufbau einer CNC-Maschine 20 zum Herstellen von bogenverzahnten Kegelrädern 31. Eine solche Maschine 20 kann erfindungsgemäss ausgelegt oder umgerüstet werden, um ein Entgraten oder Anfasen des Kegelrades 31 mittels denselben Stabmessern zu ermöglichen, die auch beim Fertigen der Verzahnung des Kegelrades 31 verwendet werden.

Die CNC-Maschine 20 kann wie folgt aufgebaut sein. Auf einem Maschinenbett 21 ist ein Maschinengehäuse 19 entlang einer geraden Koordinatenachse X (1. Achse) horizontal und linear geführt. Ein erster Schlitten 18 ist auf einer Führung 10, die an einer Seitenfläche des Maschinengehäuses 19 angebracht ist, entlang einer geraden Koordinatenachse Z (2. Achse) mittels eines Spindeltriebs 16 in der Höhe verfahrbar. Auf dem Maschinenbett 21 ist ein Werkstückspindelträger 14 mit einem zweiten Schlitten 12 entlang einer geraden Koordinatenachse Y (3. Achse), die zur X-Achse rechtwinkelig ist, auf einer Führung 13 horizontal und linear geführt. Auf dem Schlitten 12 befindet sich eine Schwenkvorrichtung 28 mit vertikaler Achse C (4. Achse). Die Führung 10 des ersten Schlittens 18 und die Z-Achse sind gegen die Vertikale geneigt.

Der erste Schlitten 18 trägt eine um eine Werkzeugspindelachse 17 (5. Achse) drehbar gelagerte Werkzeugspindel 11. Die Werkzeugspindel 11 trägt ein Werkzeug, hier beispielshalber einen Messerkopf 7 mit mehreren Stabmessern. Durch den zweiten Schlitten 12 und durch die Schwenkvorrichtung 28 ist eine Werkstückspindel 30 auf dem Maschinenbett 21 horizontal geführt und linear verschiebbar bzw. schwenkbar. Die Schenkvorrichtung 28 trägt die Werkstückspindel 30, die um eine Werkstückspindelachse 32 (6. Achse) drehbar ist. Die Werkstückspindel 30 trägt ein Werkstück 31, im vorliegendem Beispiel ein bogenverzahntes Kegelradritzel. Die Schwenkvorrichtung 28 ist um die C-Achse horizontal geführt schwenkbar, um das Werkstück 31 in eine Bearbeitungsposition zu schwenken und gegebenenfalls Bewegungen während des erfindungsgemässen Anfasens und/oder Entgratens durchführen zu können.

Insgesamt weist die Maschine 20 also sechs numerisch gesteuerte Achsen auf. Um das erfindungsgemässe Entgraten realisieren zu können, werden Maschinen mit mindestens fünf numerisch gesteuerten Achsen bevorzugt.

Es können jedoch auch andere CNC-Verzahnmaschinen gemäss Erfindung umgerüstet oder ausgestattet werden, wobei Maschinen mit sechs numerisch gesteuerten Achsen bevorzugt sind. Es besteht auch die Möglichkeit Maschinen mit 2 Messerköpfen, die für eine Schrupp-Schlicht-Verzahnungsfräsen eingesetzt werden zu verwenden und hierbei einen der beiden Messerköpfe zum Entgraten zu nutzen.

Unterhalb des ersten Schlittens 18 ist vorteilhafter Weise das Maschinenbett 21 ausgespart und ein Spänesammler 35 angeordnet, in den Späne, die beim Anfasen und/oder Entgraten anfallen, im Wesentlichen durch Schwerkraft gelangen.

Der obere Bereich des zweiten Schlittens 12, der nicht von der Schwenkvorrichtung 28 eingenommen ist, weist vorzugsweise eine Abdeckung 36 auf, die zu dem Spänesammler 35 hin abfallend ausgerichtet ist. Weiter hat die Maschine 20 eine Verkleidung 37, die fest mit dem Maschinenbett 21 verbunden ist und zwischen dem Maschinengehäuse 19 und dem zweiten Schlitten 12 angeordnet ist. Die Verkleidung 37 ist durch einen Faltenbalg 38 mit dem Maschinengehäuse 19 verbunden. Die Verkleidung 37 und der Faltenbalg 38 sind ebenfalls zu dem Spänesammler 35 hin abfallend ausgerichtet. An die Verkleidung 37 schliesst sich eine Abschirmung 39 an, die die Schwenkvorrichtung 28 halbkreisförmig umgibt und auf dem zweiten Schlitten 12 befestigt ist.

Details zur Technik des Kegelradfräsens mit einer 6-Achsenmaschine können zum Beispiel der Deutschen Patentschrift DE19646189 C2 entnommen werden.

Eine andeutungsweise dargestellte CNC-Steuerung 29 sorgt dafür, dass die sechs numerisch gesteuerten Achsen die zum Entgraten oder Anfasen erforderlichen Bewegungen ausführen, nachdem der Verzahnprozess abgeschlossen ist. Um ein Entgraten oder Anfasen zu ermöglichen, wird die relative Neigung zwischen dem tellerförmigen Messerkopf 7 und der Stirnfläche des Kegelrades 1 vergrössert, wie den Figuren 2 und 3 zu entnehmen ist. Im oberen Teil der Fig. 2 ist die Draufsicht auf einen tellerförmigen Messerkopf 7 mit mehreren Stabmessern 3 und 4 gezeigt. Die Stabmesser 3, 4 sind im oberen Teil der Fig. 2 nur angedeutet, da sie sich auf der Seite des Messerkopfes 7 befinden, die dem Werkstück 1 zugewandt ist. Die Stabmesser 3 und 4 sind alternierend auf dem Messerkopf angeordnet, wobei das Stabmesser 3 zum Beispiel die konvexe Flanke 1.1 eines Zahns und das Stabmesser 4 zum Beispiel die konkave Flanke 1.2 eines Zahns bearbeitet. Im unteren Teil der Fig. 2 ist eine schematische Seitenansicht gezeigt. In dieser Seitenansicht kann man erkennen, dass die Stabmesser 3, 4 im Messerkopf 7 stecken und durch die leichte relative Neigung zwischen dem Messerkopf 7 und einem Radialschnitt des Kegelrades 1 auf der rechten Seite in die Zahnlücken eintauchen und dort die konvexen und konkaven Zahnflanken ausbilden. Die Einbaulage des Messerkopfes 7 und des Kegelrades 1 in der Verzahnmaschine 20 kann man anhand der Werkstückspindelachse 32 und der Werkzeugspindelachse 17 erkennen. Typischerweise schliesst die Projektion der Werkstückspindelachse 32 auf die Werkzeugspindelachse 17 einen Winkel a zwischen 0 und 70 Grad ein, wie in Fig. 2 angedeutet.

Zum Entgraten oder Anfasen wird die relative Lage der Werkstückspindelachse 32 zur Werkzeugspindelachse 17 geändert, wie in Fig. 3 gezeigt. Dabei wird ein grösserer Winkel a eingestellt, der vorzugsweise um eine Winkeldifferenz zwischen 10 und 60 Grad von demjenigen Winkel abweicht, der beim Fräsen des selben Kegelrades verwendet wurde. Im oberen Teil der Fig. 3 ist die Draufsicht auf einen tellerförmigen Messerkopf 7 mit mehreren Stabmessern 3 und 4 gezeigt, die zum Entgraten eingesetzt werden. Die Stabmesser 3 und 4 tauchen eines nach dem anderen in aufeinanderfolgende Zahnlücken ein, wie im unteren Teil der Fig. 3 gezeigt, wobei durch die extreme Schräglage (Neigung) nur ein Endbereich der Zahnlücken überstrichen wird. Hierbei wird gemäss einer ersten Ausführungsform die Neigung so eingestellt und werden die Achsen so bewegt, dass nur die konkaven Zahnflanken entgratet werden, da, wie eingangs beschrieben, diese Flanken mit der Rückenfläche des Kegelradzahnes in der Regel einen spitzen Winkel bilden. Dabei kommen nur diejenigen Stabmesser zum Schnitt, die zum Fertigen der konkaven Flanken eingesetzt werden. Jedes zweite Stabmesser wird in dieser Ausführungsform beim Entgraten übersprungen, d.h. zwischen ihm und der Zahnflanke tritt kein Kontakt auf.

In einer weiteren Ausführungsform können die Maschineneinstellungen so gewählt werden, daß das Stabmesser 3 etwaige Grate an einer konvexen Flanke entfernt und das Stabmesser 4 etwaige Grate an einer konkaven Flanke entfernt.

Vorzugsweise sind die Werkstückspindel 30 und die Werkzeugspindel 11 so angeordnet, dass sich beim Verzahnen und Entgraten oder Anfasen das Werkstück 31 und das Werkzeug 7 im Wesentlichen über dem Bereich der Maschine 20 befinden, wo die entstehenden Späne problemlos aufgefangen werden können. Wird eine Maschine gemäss Fig. 1 eingesetzt, so ist zu erwähnen, dass die Späne, die beim Anfasen oder Entgraten entstehen im Wesentlichen durch Schwerkraft in den Spänesammler 35 gelangen.

Gemäss Erfindung wird zum Anfasen und/oder Entgraten das selbe Werkzeug 7 verwendet, das auch bereits zum spanenden Bearbeiten des Werkstücks 31 verwendet wurde. Um das Anfasen oder Entgraten zu ermöglichen, wird durch das Verstellen mindestens einer der Achsen der Maschine 20 die Werkstückspindel 30 samt dem Kegelrad 31 relativ zu dem Messerkopf stark geneigt, wie in Fig. 3 gezeigt. Bei gleichzeitigem koordinierten Rotieren der Werkstückspindel 30 um die Werkstückspindelachse 32 und des Messerkopfes 7 um die Werkzeugspindelachse 17, greifen die Stabmesser 3, 4 des Messerkopfes 7 nacheinander in Zahnzwischenräume benachbarter Zähne ein und führen dort eine Anfas- oder Entgratungsbewegung in Bezug auf die Kanten des Kegelrades 31 aus. Um ein koordiniertes Rotieren der Werkstückspindel 30 und des Messerkopfes 7 zu ermöglichen, werden durch die Steuerung 29 mindestens diese beiden Rotationsbewegungen gekoppelt.

Im einfachsten Fall reicht eine Drehbewegung um die vertikale C-Achse, wie anhand der Maschine 20 in Fig. 1 verdeutlicht werden kann. Durch eine Drehung des Werkstückspindelträgers 14 um die C-Achse, kann die Neigung zwischen Kegelrad 31 und Messerkopf 7 verstellt werden. Werden dann mit geeigneten Rotationsgeschwindigkeiten Rotationsbewegungen des Kegelrads 31 um die Werkstückspindelachse 32 und des Messerkopfes 7 um die Werkzeugspindelachse 17 ausgeführt, so erfolgt das erfindungsgemässe Entgraten.

Bei komplizierteren geometrischen Formen des Kegelrades, müssen auch andere Achsen verstellt werden. Gegebenenfalls muss die Verstellung der Achsen dynamisch erfolgen, um sicher zu stellen, dass die Stabmesser nur im Endbereich der zu entgratenden Zähne in Kontakt treten und aktiv werden. Vorzugsweise werden mittels der Steuerung 29 ein Teil der Achsbewegungen oder alle Bewegungen der sechs numerisch gesteuerten Achsen gekoppelt.

In einer weiteren Ausführungsform wird in einem ersten Durchgang das Entgraten vorgenommen. Beim Entgraten wird die relative Neigung des Messerkopfes 7 zum Werkstück 1 so eingestellt, dass die Stabmesser nur Grate entfernen, die von den Zahnkanten wegstehen. In einem weiteren Durchgang wird dann eine Fase erzeugt. Zu diesem Zweck steuert die programmierbare Steuerung 29 die Achsen so, dass die Stabmesser im gewünschten Winkel die Zahnkanten bearbeiten, die vorher entgratet wurden. Dabei lässt sich Sekundärgrat vermeiden da bei entsprechender steiler Neigung der Stabmesser in Bezug auf das Kegelrad keine grossen Werkstoffmengen zerspant werden müssen, um die volle Zahnhöhe zu entgraten.

Es ist ein Vorteil der Erfindung, dass die Stabmesser keine besondere Profilform der Schneiden brauchen, um gemäss Erfindung zum Entgraten oder Anfasen eingesetzt werden zu können. Man muss also vor dem Anfasen oder Entgraten weder neue Werkzeuge einspannen noch muss das zu entgratende Werkstück in eine andere Maschine übergeben werden. Es kann gemäss Erfindung mit der gleichen Werkstückaufspannung bearbeitet und angefast oder entgratet werden. Dadurch ergeben sich enorme Zeitersparnisse.

Es wird auch als ein Vorteil der Erfindung angesehen, dass durch relativ kleine und kurze Bewegungen eine relative Positionierung des Werkzeugs und des Werkstücks eingestellt werden kann, die ein Anfasen oder Entgraten ermöglicht. Damit ist der Übergang vom Fertigen des Werkstücks zum Anfasen oder Entgraten relativ schnell zu bewerkstelligen.

Die zu entgratende Profilkante ist bei Kegelrädern mit bogenförmiger Verzahnung eine räumlich stark gekrümmte Kurve, die sich aus dem Schnitt zweier Flächen ergibt, nämlich der ohnehin schon gekrümmten Flanke mit anschliessender Fussausrundung sowie der Rückenfläche des Kegelradzahnes. Eine solche Profilkante mit stark gekrümmter Kurve kann in vorteilhafter Weise mit einer Vorrichtung gemäss Erfindung angefast oder entgratet werden, da sich die sechs Achsen der Maschine so steuern lassen, dass sich die Schneiden der Stabmesser in gewissen Grenzen frei zu der Profilkante bewegen können.

Vorzugsweise ist die Verzahnmaschine so ausgelegt, wie in Fig. 1 gezeigt. Eine solche Anordnung der sechs Achsen macht es möglich, dass der Bereich in dem sich die Eingriffsstelle von Werkstück 31 und Werkzeug 7 befindet, gross genug ist, um ein starkes Neigen des Kegelrades 31 in Bezug auf das tellerförmige Werkzeug 7 zu ermöglichen, ohne dass es zu Behinderungen oder Kollisionen kommt.

Die Verzahnmaschine 20 ist mit einer programmierbaren Steuerung 29 ausgestattet, die es ermöglicht die Einstellung der Achsen so vorzunehmen, dass entgratet oder angefast werden kann.

In einer bevorzugten Ausführungsform wird die programmierbare Steuerung so ausgelegt, dass mindestens zwei der sechs numerisch steuerbaren Achsen bewegungsmässig gekoppelt sind. Besonders bevorzugt ist die Kopplung von fünf oder gar sechs der numerisch gesteuerten Achsen.

In einer weiteren bevorzugten Ausführungsform wird die programmierbare Steuerung so ausgelegt, dass sie den Bewegungsablauf so steuert, dass die Stabmesser nur in Endbereich der Zahnzwischenräume eintauchen.

In Fig. 1 ist ein Kabel angedeutet, dass mit der Nummer 27 versehen ist. Anstatt die Steuerung 29 in der Verzahnmaschine 20 vorzusehen, kann die gesamte Steuerung oder ein Teil der Steuerung nach Aussen verlagert werden. In diesem Fall würde Steuerungsinformation über das Kabel 27 an die Verzahnmaschine 20 übergeben werden.

Die Erfindung kann besonders vorteilhaft in einer CNC gesteuerten Verzahnmaschine gemäss DE19646189 C2 eingesetzt werden.

## Patentansprüche

1. Kegelrad-Verzahnmaschine (20) zum Anfasen und/oder Entgraten von Kanten an den Zähnen eines Kegelrades (1; 31), wobei die Verzahnmaschine (20) eine Werkstückspindel (30), weiche das Kegelrad (1; 31) koaxial aufnimmt, einen Schlitten (18), der einen Messerkopf (7) mit mehreren Stabmessern (3, 4) aufnimmt, und mindestens fünf numerisch steuerbaren Achsen (X, Y, Z, C, 17, 32) aufweist, die mittels einer programmierbaren Steuerung (29) angesteuert sind, wobei
- eine der Achsen eine Werkstückspindelachse (32) der Werkstückspindel (30) bildet,
- eine andere Achse eine Werkzeugspindelachse (17) des Messerkopfes (7) bildet, und
- die mindestens fünf numerisch steuerbaren Achsen (X, Y, Z, C, 17, 32) so ausgebildet und angeordnet sind, dass durch das Verstellen mindestens einer der Achsen die Werkstückspindel (30) samt dem Kegelrad (1; 31) relativ zu dem Messerkopf neigbar sind,
**dadurch gekennzeichnet, dass**
- die Stabmesser (3, 4) bei gleichzeitigem Rotieren der Werkstückspindel (30) um die Werkstückspindelachse (32) und des Messerkopfes (7) um die Werkzeugspindelachse (17) nacheinander in Zahnzwischenräume benachbarter Zähne eintauchen und eine Anfas- oder Entgratungsbewegung in Bezug auf die Kante ausführen.
- die Werkstückspindelachse (32) und/oder Werkzeungspindelachse (17) so verstellbar sind, dass die relative Neigung (a) zwischen der Werkstückspindel (30) samt dem Kegelrad (1; 31) und dem Messerkopf (7) vergrösserbar ist, und dass
- derselbe Messerkopf (7) benutzbar ist für die Verzahnungsbearbeitung des Kegelrades (1; 31) und für das Anfasen und/oder Entgraten der Kanten an den Zähnen des Kegelrades (1; 31).

2. Kegelrad-Verzahnmaschine (20) nach Anspruch 1, **dadurch gekennzeichnet, dass** die programmierbare Steuerung (29) so ausgebildet ist, dass es möglich ist je nach zu entgratendem Kegelrad (1; 31) die Werkstückspindel (30) samt dem Kegelrad (1; 31) relativ zu dem Messerkopf (7) so zu neigen, dass die Stabmesser (3, 4) nicht in die bereits erzeugten Zahnflanken eingreifen.

3. Kegelrad-Verzahnmaschine (20) nach Anspruch 1, **dadurch gekennzeichnet, dass** die programmierbare Steuerung (29) so ausgebildet ist, dass sie die mindestens zwei der sechs numerisch steuerbaren Achsen bewegungsmässig koppelt.

4. Kegelrad-Verzahnmaschine (20) nach Anspruch 1, **dadurch gekennzeichnet, dass** die programmierbare Steuerung (29) so ausgebildet ist, dass sie den Bewegungsablauf so steuert, dass die Stabmesser (3, 4) nur im Endbereich der Zahnzwischenräume eintauchen.

5. Kegelrad-Verzahnmaschine (20) nach einem der Ansprüche 1 bis 4, **dadurch gekennzeichnet, dass** das Anfasen und/oder Entgraten ein kontinuierlicher Prozess ist, bei dem ein erstes Stabmesser (3) in eine erste Zahnlücke des Kegelrades (31; 1) eintaucht und die Entgratungsbewegung ausführt und ein zweites Stabmesser (4) in eine zweite Zahnlücke des Kegelrades (31; 1) eintaucht und die Entgratungsbewegung ausführt.

6. Kegelrad-Verzahnmaschine (20) nach einem der Ansprüche 1 bis 5, **dadurch gekennzeichnet, dass** es sich bei dem Kegelrad um ein bogenverzahntes Ritzel (31) oder ein bogenverzahntes Tellerrad (1) handelt.

7. Verfahren zum Anfasen und/oder Entgraten von Kanten an den Zähnen eines Kegelrades (1; 31) auf einer Kegelrad-Verzahnmaschine (20) mit mindestens fünf numerisch steuerbaren Achsen (X, Y, Z, C, 17, 32), bei der das Kegelrad (1; 31) an einer Werkstückspindel (30) mit Werkstückspindelachse (32) drehbar gelagert ist und ein Messerkopf (7) mit mehreren Stabmessern (3, 4) um eine Werkzeugspindelachse (17) drehbar gelagert ist,
**dadurch gekennzeichnet,**
**dass** das Verfahren die folgenden Schritte umfasst, die anschliessend an eine Verzahnungsbearbeitung des Kegelrades (1; 31) ausgeführt werden:
- Verstellen der Werkstückspindelachse (32) und/oder Werkzeugspindelachse (17) um die relative Neigung (a) zwischen der Werkstückspindel (30) samt dem Kegelrad (1; 31) und dem Messerkopf (7) zu vergrössern,
- Ausführen einer koordinierten Rotation der Werkstückspindel (30) um die Werkstückspindelachse (32) und des Messerkopfes (7) um die Werkzeugspindelachse (17), um die Stabmesser (3, 4) des Messerkopfes (7) nacheinander in Zahnzwischenräume benachbarter Zähne des Kegelrades (1; 31) eingreifen zu lassen und dort eine Anfas- oder Entgratungsbewegung in Bezug auf Kanten des Kegelrades (1; 31) auszuführen,
wobei mindestens zwei der mindestens fünf numerisch steuerbaren Achsen (X, Y, Z, C, 17, 32) bewegungsmässig gekoppelt sind, um die koordinierte Rotation zu erzielen, und
wobei die Verzahnungsbearbeitung des Kegelrades (1; 31) und das Anfasen und/oder Entgraten der Kanten an den Zähnen des Kegelrades (1; 31) mit demselben Messerkopf (7) ausgeführt werden.

8. Verfahren nach Anspruch 7, **dadurch gekennzeichnet, dass** die Stabmesser (3, 4) alternierend auf dem Messerkopf (7) angeordnet sind, wobei ein Teil der Stabmesser (3) zum Bearbeiten konvexer Flanken (1.1) der Zähne und ein anderer Teil der Stabmesser (4) zum Bearbeiten konkaver Flanken (1.2) der Zähne eingesetzt werden, und
- heim Ausführen der koordinierten Rotation nur die konkaven Flanken (1.2) entgratet werden und dabei nur diejenigen Stabmesser (4) zum Schnitt kommen, die zum Fertigen der konkaven Flanken (1.2) eingesetzt wurden.

9. Verfahren nach Anspruch 7, **dadurch gekennzeichnet, dass** die Stabmesser (3, 4) alternierend auf dem Messerkopf (7) angeordnet sind, wobei ein Teil der Stabmesser (3) zum Bearbeiten konvexer Flanken (1.1) der Zähne und ein anderer Teil der Stabmesser (4) zum Bearbeiten konkaver Flanken (1.2) der Zähne eingesetzt werden, und
- beim Ausführen der koordinierten Rotation die konkaven Flanken (1.2) durch diejenigen Stabmesser (4) entgratet werden, die zum Fertigen der konkaven Flanken (1.2) eingesetzt wurden, und
- beim Ausführen der koordinierten Rotation die konvexen Flanken (1.1) durch diejenigen Stabmesser (3) entgratet werden, die zum Fertigen der konvexen Flanken (1.1) eingesetzt wurden.

10. Verfahren nach einem der Ansprüche 7 bis 9, **dadurch gekennzeichnet, dass** bei komplizierteren geometrischen Formen des Kegelrades (1; 31) mehr als zwei der mindestens fünf numerisch steuerbaren Achsen (X, Y, Z, C, 17, 32) verstellt werden und diese Verstellung der Achsen dynamisch erfolgt, um sicher zu stellen, dass die Stabmesser (3, 4) nur im Endbereich der zu entgratenden Zähne in Kontakt treten und aktiv werden.

11. Verfahren nach einem der Ansprüche 7 bis 10, **dadurch gekennzeichnet, dass**
- in einem ersten Schritt die relative Neigung (α) zwischen der Werkstückspindel (30) samt dem Kegelrad (1; 31) und dem Messerkopf (7) so eingestellt wird, dass die Stabmesser (3, 4) nur Grate entfernen, die von den Zahnkanten wegstehen, und
- in einem zweiten Schritt die Achsen so gesteuert werden, dass eine Fase erzeugt wird in dem die Stabmesser (3, 4) in einem gewünschten Winkel die Zahnkanten bearbeiten, die in dem ersten Schritt entgratet wurden.

## Claims

1. Bevel gear cutting machine (20) for chamfering and/or deburring edges on the teeth of a bevel gear (1; 31), the cutting machine (20) having a workpiece spindle (30), which accommodates the bevel gear (1; 31) coaxially, a carriage (18), which accommodates a cutter head (7) having multiple bar blades (3, 4), and at least five numerically controllable axes (X, Y, Z, C, 17, 32), which are controlled using a programmable controller (29), wherein
- one of the axes forms a workpiece spindle axis (32) of the workpiece spindle (30),
- another axis forms a tool spindle axis (17) of the cutter head (7), and
- the at least five numerically controllable axes (X, Y, Z, C, 17, 32) are implemented and situated in such a way that, by adjusting at least one of the axes, the workpiece spindle (30), together with the bevel gear (1; 31), may be inclined in relation to the cutter head,
**characterized in that**
- the bar blades (3, 4) plunge in sequence into tooth spaces of adjacent teeth during simultaneous rotation of the workpiece spindle (30) around the workpiece spindle axis (32) and the cutter head (7) around the tool spindle axis (17) and execute a chamfering or deburring movement in relation to the edge,
- the workpiece spindle axis (32) and/or tool spindle axis (17) are adjustable in such a way that the relative inclination (a) between the tool spindle (30), including the bevel gear (1; 31), and the cutter head (7) may be enlarged, and
- the same cutter head (7) is usable for the gear cutting machining of the bevel gear (1; 31) and for the chamfering and/or deburring of the edges on the teeth of the bevel gear (1; 31).

2. Bevel gear cutting machine (20) according to claim 1, **characterized in that** the programmable controller (29) is implemented in such a way that it is possible, depending on the bevel gear (1; 31) to be deburred, to incline the workpiece spindle (30), together with the bevel gear (1; 31), in relation to the cutter head (7) in such a way that the bar blades (3, 4) do not engage in the already generated tooth flanks.

3. Bevel gear cutting machine (20) according to claim 1, **characterized in that** the programmable controller (29) is implemented in such a way that it couples the at least two of the six numerically controllable axes in regard to movement.

4. Bevel gear cutting machine (20) according to claim 1, **characterized in that** the programmable controller (29) is implemented in such a way that it controls the movement sequence in such a way that the bar blades (3, 4) only plunge into the end area of the tooth intermediate spaces.

5. Bevel gear cutting machine (20) according to one of claims 1 through 4, **characterized in that** the chamfering and/or deburring is a continuous process, in which a first bar blade (3) plunges into a first tooth space of the bevel gear (31; 1) and executes the deburring movement, and a second bar blade (4) plunges into a second tooth space of the bevel gear (31; 1) and executes the deburring movement.

6. Bevel gear cutting machine (20) according to one of claims 1 through 5, **characterized in that** the bevel gear is a spiral-toothed pinion (31) or a spiral-toothed ring gear (1).

7. Method for chamfering and/or deburring edges on the teeth of a bevel gear (1; 31) on a bevel gear cutting machine (20) having at least five numerically controllable axes (X, Y, Z, C, 17, 32), in which the bevel gear (1; 31) is mounted so it is rotatable on a workpiece spindle (30) having workpiece spindle axis (32) and a cutter head (7) having multiple bar blades (3, 4) is mounted so it is rotatable around a tool spindle axis (17),
**characterized in that**
the method comprises the following steps, which are executed subsequent to gear cutting machining of the bevel gear (1; 31):
- altering the workpiece spindle axis (32) and/or the tool spindle axis (17) to increase the relative inclination (a) between the workpiece spindle (30), together with the bevel gear (1; 31), and the cutter head (7),
- executing a coordinated rotation of the workpiece spindle (30) around the workpiece spindle axis (32) and the cutter head (7) around the tool spindle axis (17) to have the bar blades (3, 4) of the cutter head (7) engage in sequence in tooth spaces of adjacent teeth of the bevel gear (1; 31) and execute a chamfering or deburring movement in relation to edges of the bevel gear (1; 31) therein,
whereby at least two of the at least five numerically controllable axes (X, Y, Z, C, 17, 32) are being coupled in regard to movement to achieve the coordinated rotation, and
whereby the gear cutting machining of the bevel gear (1; 31) and the chamfering and/or deburring of the edges on the teeth of the bevel gear (1; 31) is being executed using the same cutter head (7).

8. Method according to claim 7, **characterized in that** the bar blades (3, 4) are situated alternating on the cutter head (7), whereby one part of the bar blades (3) is being used to machine convex flanks (1.1) of the teeth and another part of the bar blades (4) is being used to machine concave flanks (1.2) of the teeth, and
- upon execution of the coordinated rotation, only the concave flanks (1.2) are being deburred, and only those bar blades (4) cutting which were used to manufacture the concave flanks (1.2).

9. Method according to claim 7, **characterized in that** the bar blades (3, 4) are situated alternating on the cutter head (7), one part of the bar blades (3) being used to machine convex flanks (1.1) of the teeth and another part of the bar blades (4) being used to machine concave flanks (1.2) of the teeth, and
- upon execution of the coordinated rotation, the concave flanks (1.2) being deburred by those bar blades (4) which were used to manufacture the concave flanks (1.2), and
- upon execution of the coordinated rotation, the convex flanks (1.1) being deburred by those bar blades (3) which were used to manufacture the convex flanks (1.1).

10. Method according to one of claims 7 through 9, **characterized in that**, in the event of more complicated geometric shapes of the bevel gear (1; 31), more than two of the at least five numerically controllable axes (X, Y, Z, C, 17, 32) are altered and this altering of the axes is performed dynamically, to ensure that the bar blades (3, 4) only come into contact and become active in the end area of the teeth to be deburred.

11. Method according to one of claims 7 through 10, **characterized in that**
- in a first step, the relative inclination (a) between the workpiece spindle (30), together with the bevel gear (1; 31), and the cutter head (7) is set in such a way that the bar blades (3, 4) only remove burrs which protrude from the tooth edges, and
- in a second step, the axes are controlled in such a way that a chamfer is generated, **in that** the bar blades (3, 4) machine the tooth edges, which were deburred in the first step, at a desired angle.

## Revendications

1. Machine à tailler les engrenages pour roue conique (20) destinée à chanfreiner et/ou ébavurer les arêtes au niveau des dents d'une roue conique (1 ; 31), dans laquelle la machine à tailler les engrenages (20) présente une broche porte-pièce (30) qui porte la roue conique (1 ; 31) de façon coaxiale, un coulisseau (18) qui porte une tête porte-lames (7) comportant plusieurs lames droites (3, 4) et au moins cinq axes pouvant être commandés par commande numérique (X, Y, Z, C, 17, 32), qui sont commandés au moyen d'une commande programmable (29), dans laquelle
- un des axes forme un axe de broche porte-pièce (32) de la broche porte-pièce (30),
- un autre axe forme un axe de broche porte-outil (17) de la tête porte-lames (7), et
- les axes pouvant être commandés par commande numérique (X, Y, Z, C, 17, 32), au moins au nombre de cinq, sont conçus et disposés de façon telle que par le réglage d'au moins un des axes, la broche porte-pièce (30) y compris la roue conique (1 ; 31) peuvent être inclinées par rapport à la tête porte-lames,
**caractérisée en ce que**
- les lames droites (3, 4), lors d'une rotation simultanée de la broche porte-pièce (30) autour de l'axe de broche porte-pièce (32) et de la tête porte-lames (7) autour de l'axe de broche porte-outil (17) plongent l'une après l'autre dans les entredents de dents voisines et exécutent un déplacement de chanfreinage ou d'ébavurage par rapport à l'arête,
- l'axe de broche porte-pièce (32) et/ou l'axe de broche porte-outil (17) peuvent être réglés de façon telle que l'inclinaison relative (a) entre la broche porte-pièce (30) y compris la roue conique (1 ; 31) et la tête porte-lames (7) peut être augmentée, et **en ce que**
- la même tête porte-lames (7) peut être exploitée pour l'usinage de denture de la roue conique (1 ; 31) et pour le chanfreinage et/ou l'ébavurage des arêtes au niveau des dents de la roue conique (1 ; 31).

2. Machine à tailler les engrenages pour roue conique (20) selon la revendication 1, **caractérisée en ce que** la commande programmable (29) est exécutée de façon telle qu'il est possible, en fonction de la roue conique (1 ; 31) à ébavurer, d'incliner la broche porte-pièce (30) y compris la roue conique (1 ; 31) par rapport à la tête porte-lames (7) de façon à ce que les lames droites (3, 4) ne s'engrènent pas dans les profils de dents déjà générés.

3. Machine à tailler les engrenages pour roue conique (20) selon la revendication 1, **caractérisée en ce que** la commande programmable (29) est exécutée de façon telle qu'elle couple en déplacement au moins deux des six axes pouvant être commandés par commande numérique.

4. Machine à tailler les engrenages pour roue conique (20) selon la revendication 1, **caractérisée en ce que** la commande programmable (29) est exécutée de façon telle qu'elle commande le déroulement du déplacement de façon à ce que les lames droites (3, 4) plongent uniquement dans la zone d'extrémité des entredents.

5. Machine à tailler les engrenages pour roue conique (20) selon l'une des revendications 1 à 4, **caractérisée en ce que** le chanfreinage et/ou l'ébavurage est (sont) un processus continu dans lequel une première lame droite (3) plonge dans un premier entredent de la roue conique (31 ; 1) et exécute le déplacement d'ébavurage, et une seconde lame droite (4) plonge dans un second entredent de la roue conique (31 ; 1) et exécute le déplacement d'ébavurage.

6. Machine à tailler les engrenages pour roue conique (20) selon l'une des revendications 1 à 5, **caractérisée en ce qu'**il s'agit concernant la roue conique d'un pignon à denture hypoïde (31) ou d'une couronne à denture hypoïde (1).

7. Procédé de chanfreinage et/ou d'ébavurage d'arêtes de dents d'une roue conique (1 ; 31) sur une machine à tailler les engrenages pour roue conique (20) comportant au moins cinq axes pouvant être commandés par commande numérique (X, Y, Z, C, 17, 32), dans lequel la roue conique (1 ; 31) comprenant un axe de broche porte-pièce (32) est logée de façon à pouvoir pivoter sur une broche porte-pièce (30) et dans lequel une tête porte-lames (7) comportant plusieurs lames droites (3, 4) est logée de façon à pouvoir pivoter autour d'un axe de broche porte-outil (17),
**caractérisé en ce**
**que** le procédé comprend les étapes suivantes, qui sont exécutées suite à l'usinage de denture de la roue conique (1 ; 31) :
- réglage de l'axe de broche porte-pièce (32) et/ou de l'axe de broche porte-outil (17) pour augmenter l'inclinaison relative (a) entre la broche porte-pièce (30) y compris la roue conique (1 ; 31) et la tête porte-lames (7),
- exécution d'une rotation coordonnée de la broche porte-pièce (30) autour de l'axe de broche porte-pièce (32) et de la tête porte-lames (7) autour de l'axe de broche porte-outil (17) afin de faire pénétrer les lames droites (3, 4) de la tête porte-lames (7) l'une après l'autre dans les entredents de dents voisines de la roue conique (1 ; 31) et d'y exécuter un déplacement de chanfreinage ou d'ébavurage par rapport aux arêtes de la roue conique (1 ; 31),
où au moins deux des cinq axes pouvant être commandés par commande numérique (X, Y, Z, C, 17, 32) sont couplés en déplacement afin d'obtenir la rotation coordonnée, et
où l'usinage de la denture de la roue conique (1 ; 31) et le chanfreinage et/ou l'ébavurage des arêtes au niveau des dents de la roue conique (1 ; 31) sont exécutés avec la même tête porte-lames (7).

8. Procédé selon la revendication 7, **caractérisé en ce que** les lames droites (3, 4) sont disposées en alternance sur la tête porte-lames (7), une partie des lames droites (3) étant utilisée pour l'usinage de flancs convexes (1.1) des dents et une autre partie des lames droites (4) pour l'usinage des flancs concaves (1.2) des dents, et
- lors de l'exécution de la rotation coordonnée, seuls les flancs concaves (1.2) sont ébavurés et ne viennent alors couper que les lames droites (4) qui ont été utilisées pour la réalisation des flancs concaves (1.2).

9. Procédé selon la revendication 7, **caractérisé en ce que** les lames droites (3, 4) sont disposées en alternance sur la tête porte-lames (7), une partie des lames droites (3) étant utilisée pour l'usinage de flancs convexes (1.1) des dents et une autre partie des lames droites (4) pour l'usinage des flancs concaves (1.2) des dents, et
- lors de l'exécution de la rotation coordonnée, les flancs concaves (1.2) sont ébavurés par les lames droites (4) qui ont été utilisées pour la réalisation des flancs concaves (1.2), et
- lors de l'exécution de la rotation coordonnée, les flancs convexes (1.1) sont ébavurés par les lames droites (3) qui ont été utilisées pour la réalisation des flancs convexes (1.1).

10. Procédé selon l'une des revendications 7 à 9, **caractérisé en ce qu'**avec des formes géométriques plus complexes de la roue conique (1 ; 31), plus de deux axes pouvant être commandés par commande numérique (X, Y, Z, C, 17, 32), au moins au nombre de cinq, sont réglés, et ce réglage des axes se fait de façon dynamique pour garantir que les lames droites (3, 4) entrent en contact et sont actives uniquement dans la zone d'extrémité des dents à ébavurer.

11. Procédé selon l'une des revendications 7 à 10, **caractérisé en ce que**
- lors d'une première étape, l'inclinaison relative (a) entre la broche porte-pièce (30) y compris la roue conique (1 ; 31) et la tête porte-lames (7) est réglée de façon à ce que les lames droites (3, 4) ne retirent que les bavures qui partent des arêtes de la dent, et
- lors d'une seconde étape, les axes sont commandés de façon telle que l'on génère un chanfrein dans lequel les lames droites (3, 4) usinent selon un angle souhaité les arêtes des dents qui ont été ébavurées lors de la première étape.
